# EUROPÄISCHE PATENTSCHRIFT

(11) **EP 1 963 761 B1**
(45) Veröffentlichungstag und Bekanntmachung des Hinweises auf die Patenterteilung: **06.05.2009**
(21) Anmeldenummer: 05822592.1
(22) Anmeldetag: 23.12.2005
(51) Int. Cl.: F25B 41/06, B60H 1/00, F16L 9/19, F16L 11/22, F28D 1/047

(54) **FLEXIBLE FLUIDLEITUNG UND VERFAHREN ZU IHRER HERSTELLUNG**
FLEXIBLE FLUID LINE AND METHOD FOR PRODUCING IT
CONDUITE À FLUIDE SOUPLE ET SON PROCÉDÉ DE FABRICATION

(43) Veröffentlichungstag der Anmeldung: 03.09.2008
(73) Patentinhaber: Piflex P/S, 6240 Logumkloster (DK)
(72) Erfinder: OLSSON, Ole, DK-7850 Stoholm (DK)
(74) Vertreter: Knoblauch, Andreas
(86) Internationale Anmeldenummer: PCT/EP2005/013988
(87) Internationale Veröffentlichungsnummer: WO 2007/079761

(56) Entgegenhaltungen:
- EP-A- 1 279 911
- EP-A- 1 447 606
- WO-A-20/04046601
- DE-A1- 4 033 636
- US-A1- 2003 106 677
- PATENT ABSTRACTS OF JAPAN Bd. 2002, Nr. 02, 2. April 2002 (2002-04-02) -& JP 2001 289574 A (PURANTETSUKUSU:KK), 19. Oktober 2001 (2001-10-19)

## Beschreibung

Die Erfindung betrifft eine flexible Fluidleitung mit mehreren parallel nebeneinander angeordneten Rohren, die an mindestens einem Ende ein gemeinsames Anschlußelement aufweisen und in einen Kunststoffkörper eingebettet sind. Ferner betrifft die Erfindung ein Verfahren zum Herstellen einer flexiblen Fluidleitung, bei dem man mehrere Rohre parallel nebeneinander anordnet, umformt, in einen Kunststoff einbettet und an mindestens einem Ende mit einem gemeinsamen Anschlußelement versieht. Eine derartige Fluidleitung ist beispielsweise aus der EP 1 279 911 A1 bekannt.

Eine weitere derartige Fluidleitung ist aus WO 2004/046601 A1 bekannt. Die einzelnen Rohre sind hier schraubenlinienförmig geführt und umgeben einen Hohlraum, der freigelassen werden kann oder mit einem Kern gefüllt sein kann. Für die Strömung des Fluids steht die Summe der Querschnitte aller Rohre zur Verfügung. schraubenlinienförmige Führung der Rohre hat die Fluidleitung eine gewisse Flexibilität.

Solche Fluidleitungen sind gut geeignet, Fluide unter hohem Druck und ggf. auch unter hohen Temperaturen in technischen Anwendungen zu transportieren, wenn bei diesen Anwendungen starke Vibrationen, größere Relativbewegungen und aggressive Umgebungsbedingungen auftreten. Anwendungsbeispiele sind mobile Kälteanlagen, insbesondere CO₂-Klimaanlagen in Kraftfahrzeugen. Bei derartigen Anwendungen wird aus Montagegründen auch eine gewisse Flexibilität der Leitung gewünscht, ohne daß die Leitung dadurch geschwächt wird.

Die Herstellung einer derartigen Fluidleitung erfordert jedoch einen gewissen Aufwand. Man muß die nebeneinander liegenden Rohre gemeinsam um einen Kern wickeln, um die Schraubenlinienform zu erzeugen. Hierzu ist eine gewisse Geschicklichkeit erforderlich. Eine maschinelle Herstellung ist nur begrenzt möglich. Man kann allenfalls maschinell betriebene Werkzeuge zu Hilfe nehmen.

Der Erfindung liegt die Aufgabe zugrunde, eine flexible Fluidleitung anzugeben, die einfach herzustellen ist.

Diese Aufgabe wird bei einer flexiblen Fluidleitung der eingangs genannten Art dadurch gelöst, daß ein zwischen den beiden Enden befindlicher Abschnitt der Rohre mäanderförmig gebogen ist.

Eine Mäanderform, bei der mehrere in Längsrichtung der Rohre angeordnete Wellen aufeinander folgen, läßt sich wesentlich einfacher herstellen als eine schraubenlinienförmig geführte Windung von mehreren parallel zueinander angeordneten Rohren. Damit ist zunächst der Umformvorgang wesentlich vereinfacht. Darüber hinaus ist eine Fluidleitung mit mäanderförmig gebogenen Rohren im allgemeinen noch flexibler als eine Fluidleitung, bei der die Rohre parallel zueinander schraubenlinienförmig geführt sind. Die mäanderförmig ausgebildete Fluidleitung hat also weitere Vorteile.

Hierbei ist bevorzugt, daß jedes Rohr mehrere kreisbogenförmige Bogenabschnitte aufweist. Ein Formwerkzeug, das zum Erzeugen von Kreisbögen genutzt werden kann, läßt sich relativ einfach herstellen. Die zum Umformen notwendigen Stempel können dann eine zylindermantelabschnittsförmige Form aufweisen. Die Bogenabschnitte können, wenn dies erforderlich sein sollte, auch durch geradlinig geführte Abschnitte miteinander verbunden sein. Allerdings ist es in der Regel ausreichend, wenn die Bogenabschnitte unmittelbar oder mit kleinen Abständen aneinander anschließen.

Alternativ oder zusätzlich kann vorgesehen sein, daß jedes Rohr mehrere sinusförmige Bogenabschnitte aufweist. Bei sinusförmigen Bogenabschnitten läßt sich eine günstigere Strömung durch die Fluidleitung realisieren. Bei sinusförmigen Bogenabschnitten kann man den Übergang zwischen zwei in entgegengesetzte Richtungen gekrümmten Bogenabschnitten so realisieren, daß die Tangente unter einem Winkel von weniger als 90° zur Längserstreckung der Fluidleitung verläuft. Dies läßt sich prinzipiell allerdings auch bei kreisbogenförmigen Abschnitten realisieren.

Vorzugsweise liegt ein Krümmungsradius eines Bogenabschnittes in einem Bereich von 1,5 bis 5 x D, wobei D der Außendurchmesser eines Rohres ist. Mit einem derartigen Krümmungsradius wird das einzelne Rohr beim Biegen nicht überbeansprucht. Wenn es sich nicht um einen kreisbogenförmigen Bogenabschnitt handelt, dann ist der Krümmungsradius ein mittlerer Krümmungsradius über einen Bogenabschnitt.

Hierbei ist bevorzugt, daß eine Periodenlänge im Bereich von 3 bis 10 x R liegt, wobei R der Krümmungsradius ist. Die Periodenlänge ist der Abstand zwischen zwei Maxima des mäanderförmigen Verlaufs. Ein derartiger Abstand erlaubt eine ausreichende Dehnung oder Kontraktion der Leitung. Wenn der Abstand größer ist, dann sind einzelne Bogenabschnitte etwas verlängert, können also gegebenenfalls geradlinig ausgebildete Zusatzabschnitte aufweisen, die parallel zur Längsachse verlaufen. Bei reinen kreislinienförmig geführten Bogenabschnitten, die unmittelbar aneinander anschließen, beträgt der Abstand vier Krümmungsradien.

Vorzugsweise weist der Kunststoffkörper einen mäanderförmigen Verlauf auf. Der Kunststoffkörper übernimmt also die Flexibilität der Rohre in vollem Maße. Ein Kunststoffkörper, der dem mäanderförmigen Verlauf der Rohre folgt, läßt sich mit relativ geringem Materialaufwand realisieren. Der Kunststoff weist eine gewisse Flexibilität oder Elastizität auf, so daß er gemeinsam mit den Rohren durch Vibrationen oder Längenänderungen verformt werden kann.

Bevorzugterweise sind die Rohre mit einem Zwischenraum zueinander angeordnet, wobei der Zwischenraum durch den Kunststoff des Kunststoffkörpers zumindest teilweise ausgefüllt ist. Die einzelnen Rohre sind also durch eine dünne Kunststoffschicht voneinander getrennt. Dies verhindert ein gegenseitiges Scheuern der Rohre aneinander, wenn die Fluidleitung im Betrieb Vibrationen ausgesetzt wird. Damit wird ein mechanischer Verschleiß klein gehalten. Außerdem vermeidet man Geräuschentwicklungen oder erreicht nur geringe Geräusche.

Bevorzugterweise ist das eine Ende der Fluidleitung gegenüber dem anderen Ende der Fluidleitung verdreht. Der Verdrehwinkel zwischen den beiden Enden beträgt vorzugsweise 90°. Der Verdrehwinkel ist dabei der Winkel zwischen einer ersten Ebene, in der die Rohre an einem Ende der Fluidleitung nebeneinander angeordnet sind, und einer zweiten Ebene, in der die Rohre am anderen Ende der Fluidleitung parallel nebeneinander angeordnet sind. Durch das Verdrehen der beiden Enden um die Längsachse der Fluidleitung erhält man eine relativ gleichmäßige Beweglichkeit der Leitung in allen radialen Richtungen, also allen Richtungen, die senkrecht zur Längsachse der Fluidleitung verlaufen.

Auch ist von Vorteil, wenn die Rohre aus einem Metall, insbesondere Stahl oder Aluminium, gebildet sind. Damit erhöht sich die Stabilität der Fluidleitung. Metall ist gegen viele Fluide bei gleichen Kosten beständiger als ein Kunststoff.

Die Aufgabe wird bei einem Verfahren der eingangs genannten Art dadurch gelöst, daß man einen zwischen den beiden Enden der Rohre befindlichen Abschnitt mäanderförmig biegt.

Ein mäanderförmiges Umformen läßt sich relativ leicht realisieren, ohne daß man die Rohre aufwickeln muß.

Vorzugsweise verwendet man zum Biegen ein Preßwerkzeug. Ein Preßwerkzeug ist vielfach verfügbar. Man muß zum mäanderförmigen Biegen lediglich eine geeignete Form verwenden.

Vorzugsweise verformt man die in einer Ebene liegenden Rohre senkrecht zu dieser Ebene. Dies ist die einfachste Vorgehensweise, um die mäanderförmige Biegung zu erreichen. Es ist im Grunde nur eine Bewegung in eine Richtung erforderlich.

Vorzugsweise versieht man die Rohre vor dem Umformen mit dem Kunststoff. Dies vereinfacht den Aufbau eines Werkzeugs, beispielsweise eines Spritzgußwerkzeugs, zum Einbetten der Rohre in den Kunststoff. Im Grunde benötigt man hier nur eine Form, die einen quaderförmigen Hohlraum aufweist. Der Kunststoff hindert das Umbiegen der Rohre in eine Mäanderform nicht.

Auch ist von Vorteil, wenn man nach dem Umformen die Enden der Fluidleitung um einen vorbestimmten Winkel, insbesondere 90°, gegeneinander verdreht. Damit ist zwar ein zusätzlicher Herstellungsschritt erforderlich. Durch das Verdrehen der beiden Enden wird aber eine erhöhte Flexibilität in alle Richtungen erreicht.

Die Erfindung wird im folgenden anhand von bevorzugten Ausführungsbeispielen in Verbindung mit der Zeichnung beschrieben. Hierin zeigen:
- Fig. 1: eine Draufsicht auf eine Fluidleitung ohne Anschlußelemente und ohne Kunststoff mit sechs parallelen Rohren,
- Fig. 2: eine Seitenansicht der Leitung nach Fig. 1,
- Fig. 3: eine Vorderansicht der Leitung nach Fig. 1,
- Fig. 4: die Leitung nach Fig. 1 mit Kunststoffkörper und Anschlußelementen,
- Fig. 5: eine Seitenansicht der Leitung nach Fig. 4,
- Fig. 6: eine Vorderansicht der Leitung nach Fig. 4,
- Fig. 7: eine schematische Ansicht einer Leitung, bei der die beiden Anschlußelemente um etwa 90° bezogen auf die Längsachse gegeneinander verdreht sind und
- Fig. 8: eine schematische Darstellung zur Erläuterung der Abhängigkeit zwischen der Flexibilität und des Strömungswiderstandes einer Leitung von der Periodenlänge.

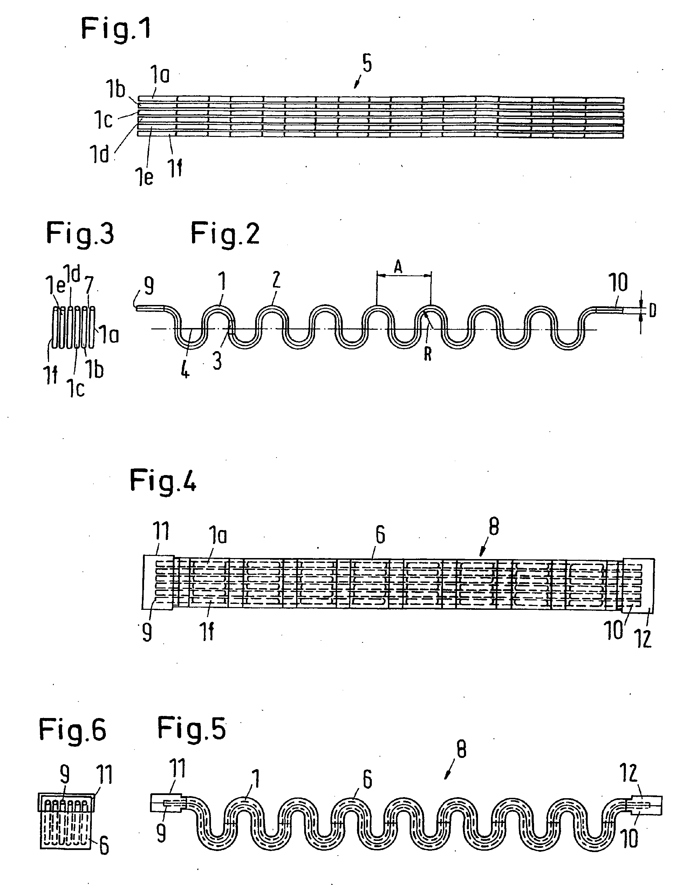

Die Fig. 1 bis 3 zeigen mehrere Rohre 1a-1f, die parallel zueinander angeordnet sind. Im vorliegenden Fall handelt es sich um sechs Rohre 1a-1f. Es können aber auch mehr oder weniger Rohre verwendet werden.

Jedes Rohr 1a-1f weist einen Außendurchmesser D auf, der im vorliegenden Ausführungsbeispiel 2,5 mm beträgt. Die Wandstärke eines Rohres 1a-1f beträgt im vorliegenden Ausführungsbeispiel 0,4 mm. Andere Werte sind natürlich möglich.

Wie aus Fig. 2 zu erkennen ist, sind die Rohre 1 mäanderförmig gebogen, d.h. sie bilden eine Mehrzahl von Bogenabschnitten 2, die aneinander anschließen oder durch kleine gerade Abschnitte 3 miteinander verbunden sind. Die Länge eines derartigen geraden Abschnitts 3 kann beispielsweise 4 mm betragen. Ein Bogenabschnitt 2 muß auch nicht unbedingt eine durchgehende Krümmung haben, sondern kann durchaus kleinere, nicht näher dargestellte Abschnitte aufweisen, die parallel zu einer Längsrichtung 4 liegen.

Ein Bogenabschnitt 2 weist einen Radius R auf, der im Bereich von 1,5 bis 5 x D liegt, wobei D der oben erwähnte Außendurchmesser der Rohre 1 ist. Vorzugsweise liegt der Krümmungsradius bei einem Außendurchmesser D von 2,5 mm zwischen 3,75 mm und 12,5 mm. Im vorliegenden Ausführungsbeispiel liegt der Krümmungsradius R bei 6 mm.

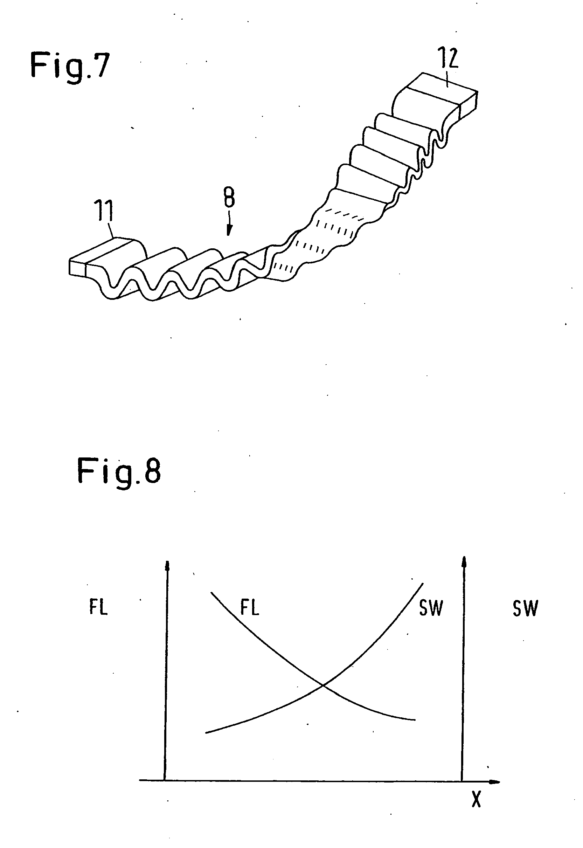

Die Bogenabschnitte 2 können kreislinienförmig gebogen sein. Sie können aber auch einen sinusförmigen Verlauf haben. Es ist nicht unbedingt erforderlich, daß Übergangsstellen zwischen zwei Bogenabschnitten 2 senkrecht zur Längsrichtung 4 liegen. Auch ein Winkel von beispielsweise 45°, wie er beim Übergang zwischen zwei sinusförmigen Bogenabschnitten auftreten würde, wäre möglich (Fig. 7).

Eine Periodenlänge A, also der Abstand zwischen zwei "Maxima" oder zwischen zwei "Nullstellen", also dem Queren einer in der Mitte in Längsrichtung 4 liegenden Ebene, beträgt vorzugsweise 3 bis 10 x R, wobei R der oben erwähnte Krümmungsradius ist. Im vorliegenden Ausführungsbeispiel beträgt der axiale Abstand zwischen zwei benachbarten Windungen oder Wellen, also die Periodenlänge A, 24 mm.

Wenn es sich nicht um kreislinienförmige Bogenabschnitte 2 handelt, dann variiert der Radius R über einen Bogenabschnitt 2. In diesem Fall ist ein mittlerer Radius anzunehmen.

Wie aus den Fig. 4 bis 6 hervorgeht, ist eine aus den Rohren 1a-1f gebildete Rohrgruppe 5 eingebettet in einen Kunststoff 6, der elastisch ist. Der Kunststoff 6 bildet einen Kunststoffkörper. Zwischen dem Rohren 1a-1f befinden sich jeweils kleine Zwischenräume 7, in die der Kunststoff 6 eindringt. Auf diese Weise wird verhindert, daß die Rohre 1a-1f aneinander reiben, wenn die in den Fig. 4 bis 6 dargestellte Fluidleitung 8 verformt wird. Eine derartige Verformung kann auftreten, wenn Einrichtungen, die an beiden Enden 9, 10 der Fluidleitung 8 angeschlossen sind, ihre Lage relativ zueinander ändern. Diese Änderung der Lage kann im Grunde in alle Raumrichtungen erfolgen.

An den beiden Enden 9, 10 der Fluidleitung 8 sind Anschlußelemente 11, 12 angeordnet, die beispielsweise einstückig mit dem Kunststoff 6 gespritzt werden können oder auch als separate Bauelemente mit den Rohren verbunden werden können. Die Anschlußelemente 11, 12 umfassen alle Rohre 1a-1f und haben neben der Zu- bzw. Abfuhr eines Fluids bzw. dem Anschließen einer Einrichtung die Aufgabe, die einzelnen Rohre 1a-1f in einer definierten Lage parallel nebeneinander zu halten.

Die Herstellung einer derartigen Fluidleitung 8 kann einfach durch ein Preßwerkzeug realisiert werden. Die in einer Ebene nebeneinander liegenden Rohre 1a-1f werden durch das Preßwerkzeug senkrecht zu dieser Ebene verformt. Die resultierende Form kann dabei kreisbogen- oder auch sinusförmige Abschnitte aufweisen und läßt sich in einem einzigen Schritt erzeugen. Es ist lediglich erforderlich, die Form des Werkzeugs so zu wählen, daß später die gewünschte Form erreicht wird.

Vor dem Umformen der Rohre 1a-1f kann man bereits den Kunststoff 6 und auch die Anschlußelemente 11, 12 erzeugen bzw. die separaten Anschlußelemente mit den Rohren verbinden. Hierzu werden die in einer Ebene parallel nebeneinander liegenden Rohre 1a-1f in eine entsprechende Spritzgußform eingelegt und der Kunststoff 6 eingespritzt. Das Umformen kann dann nach dem Aufbringen des Kunststoffs 6 erfolgen.

Wie aus Fig. 7 hervorgeht, kann man die beiden Anschlußelemente 11, 12 nach dem Herstellen der in Fig. 5 dargestellten Fluidleitung 8 noch um beispielsweise 90° gegeneinander verdrehen, so daß man eine relativ gleichmäßige Beweglichkeit der Fluidleitung in allen radialen Richtungen erhält.

Die Rohre 1a-1f sind vorzugsweise aus Stahl oder Aluminium hergestellt, andere Metalle sind denkbar.

Fig. 8 zeigt in schematischer Form die Abhängigkeit eines Verformungswiderstandes FL von der Wellenzahl X. Im Ausführungsbeispiel der Fig. 5 weist die Fluidleitung 8 acht Wellen auf. Mit einer zunehmenden Zahl von Wellen X nimmt der Verformungswiderstand FL ab.

Andererseits steigt der Strömungswiderstand SW mit zunehmender Wellenzahl X an, weil sich bei ansonsten gleicher Länge die Krümmungsradien der Wellen verkleinern.

## Patentansprüche

1. Flexible Fluidleitung (8) mit mehreren parallel nebeneinander angeordneten Rohren (1a-1f), die an mindestens einem Ende (9,10) ein gemeinsames Anschlußelement (11,12) aufweisen und in einen Kunststoffkörper (6) eingebettet sind, **dadurch gekennzeichnet, daß** ein zwischen den beiden Enden (9, 10) befindlicher Abschnitt der Rohre (1a-1f) mäanderförmig gebogen ist.

2. Fluidleitung nach Anspruch 1, **dadurch gekennzeichnet, daß** jedes Rohr (1a-1f) mehrere kreisbogenförmige Bogenabschnitte (2) aufweist.

3. Fluidleitung nach Anspruch 1 oder 2, **dadurch gekennzeichnet, daß** jedes Rohr (1a-1f) mehrere sinusförmige Bogenabschnitte (2) aufweist.

4. Fluidleitung nach Anspruch 2 oder 3, **dadurch gekennzeichnet, daß** ein Krümmungsradius (R) eines Bogenabschnittes (2) in einem Bereich von 1,5 bis 5 x D liegt, wobei D der Außendurchmesser eines Rohres (1a-1f) ist.

5. Fluidleitung nach Anspruch 4, **dadurch gekennzeichnet, daß** eine Periodenlänge (A) im Bereich von 3 bis 10 x R liegt, wobei R der Krümmungsradius ist.

6. Fluidleitung nach einem der Ansprüche 1 bis 5, **dadurch gekennzeichnet, daß** der Kunststoffkörper (6) einen mäanderförmigen Verlauf aufweist.

7. Fluidleitung nach einem der Ansprüche 1 bis 6, **dadurch gekennzeichnet, daß** die Rohre (1a-1f) mit einem Zwischenraum (7) zueinander angeordnet sind, wobei der Zwischenraum (7) durch den Kunststoff des Kunststoffkörpers (6) zumindest teilweise ausgefüllt ist.

8. Fluidleitung nach einem der Ansprüche 1 bis 7, **dadurch gekennzeichnet, daß** das eine Ende (9) der Fluidleitung (8) gegenüber dem anderen Ende (10) der Fluidleitung (8) verdreht ist.

9. Fluidleitung nach Anspruch 8, **dadurch gekennzeichnet, daß** ein Verdrehwinkel zwischen den beiden Enden (9, 10) 90° beträgt.

10. Fluidleitung nach einem der Ansprüche 1 bis 9, **dadurch gekennzeichnet, daß** die Rohre (1a-1f) aus einem Metall, insbesondere Stahl oder Aluminium, gebildet sind.

11. Verfahren zum Herstellen eine flexiblen Fluidleitung (8), bei dem man mehrere Rohre (1a-1f) parallel nebeneinander anordnet, umformt, in einen Kunststoff (6) einbettet und an mindestens einem Ende (9,10) mit einem gemeinsamen Anschlußelement (11,12) versieht, **dadurch gekennzeichnet, daß** man einen zwischen den beiden Enden (9, 10) der Rohre (1a-1f) befindlichen Abschnitt mäanderförmig biegt.

12. Verfahren nach Anspruch 11, **dadurch gekennzeichnet, daß** man zum Biegen ein Preßwerkzeug verwendet.

13. Verfahren nach Anspruch 11 oder 12, **dadurch gekennzeichnet, daß** man die in einer Ebene liegenden Rohre (1a-1f) senkrecht zu dieser Ebene (4) verformt.

14. Verfahren nach einem der Ansprüche 11 bis 13, **dadurch gekennzeichnet, daß** man die Rohre (1a-1f) vor dem Umformen mit dem Kunststoff (6) versieht.

15. Verfahren nach einem der Ansprüche 11 bis 14, **dadurch gekennzeichnet, daß** man nach dem Umformen die Enden (9, 10) der Fluidleitung (8) um einen vorbestimmten Winkel, insbesondere um 90°, gegeneinander verdreht.

## Claims

1. Flexible fluid line (8) with several tubes (1a-1f) arranged in parallel next to each other, the tubes having at at least one end (9, 10) a common connecting element (11, 12) and being embedded in a plastic member (6), **characterised in that** a section of the tubes (1a-1f) located between the two ends (9, 10) is bent in a meandering fashion.

2. Fluid line according to claim 1, **characterised in that** each tube (1a-1f) comprises several arc sections (2) in the shape of arcs of a circle.

3. Fluid line according to claim 1 or 2, **characterised in that** each tube (1a-1f) has several sine-shaped arc sections (2).

4. Fluid line according to claim 2 or 3, **characterised in that** a curvature radius (R) of an arc section (2) is in a range from 1.5 to 5 x D, D being the outer diameter of a tube (1a-1f).

5. Fluid line according to claim 4, **characterised in that** a period length (A) is in the range from 3 to 10 x R, R being the curvature radius.

6. Fluid line according to one of the claims 1 to 5, **characterised in that** the plastic material body (6) has a meander-shaped extension.

7. Fluid line according to one of the claims 1 to 6, **characterised in that** the tubes (1a-1f) are arranged with an intermediary (7) to each other, the intermediary being filled, at least partly, by the plastic material of the plastic material body (6).

8. Fluid line according to one of the claims 1 to 7, **characterised in that** one end (9) of the fluid line (8) is twisted in relation to the other end (10) of the fluid line (8).

9. Fluid line according to claim 8, **characterised in that** a twisting angle between the ends (9, 10) amounts to 90°.

10. Fluid line according to one of the claims 1 to 9, **characterised in that** the tubes (1a-1f) are made of a metal, particularly steel or aluminium.

11. Method for manufacturing a flexible fluid line (8) in which several tubes (1a-1f) are arranged next to each other, reshaped, embedded in a plastic material (6)and provided at at least one end (9, 10) with a common connecting element (11, 12), **characterised in that** a section located between the two ends (9, 10) of the tubes (1a-1f) is bent to a meander shape.

12. Method according to claim 11, **characterised in that** a pressing tool is used for the bending.

13. Method according to claim 11 or 12, **characterised in that** the tubes (1a-1f) located in one plane are bent perpendicularly to this plane (4).

14. Method according to one of the claims 11 to 13, **characterised in that** the tubes (1a-1f) are provided with the plastic material (6) before the reshaping.

15. Method according to one of the claims 11 to 14, **characterised in that** after the reshaping the ends (9, 10) of the fluid line (8) are twisted in relation to each other by a predetermined angle, preferably 90°.

## Revendications

1. Conduite à fluide (8) souple avec plusieurs tubes (1a-1f) disposés parallèlement les uns à côté des autres qui présentent au niveau d'au moins une extrémité (9, 10) un élément de raccordement (11, 12) commun et sont insérés dans un corps en matière plastique (6), **caractérisée en ce qu'**un tronçon de tubes (1a-1f) se trouvant entre les deux extrémités (9, 10) est courbé en forme de méandre.

2. Conduite à fluide selon la revendication 1, **caractérisée en ce que** chaque tube (la-1f) présente plusieurs tronçons courbés (2) en forme d'arc de cercle.

3. Conduite à fluide selon la revendication 1 ou 2, **caractérisée en ce que** chaque tube (1a-1f) présente plusieurs tronçons courbés (2) sinusoïdaux.

4. Conduite à fluide selon la revendication 2 ou 3, **caractérisée en ce qu'**un rayon de courbure (R) d'un tronçon courbé (2) se trouve dans une plage de 1,5 à 5 fois D, D étant le diamètre extérieur d'un tube (1a-1f).

5. Conduite à fluide selon la revendication 4, **caractérisée en ce qu'**une longueur de période (A) se trouve dans la plage de 3 à 10 fois R, R étant le rayon de courbure.

6. Conduite à fluide selon l'une quelconque des revendications 1 à 5, **caractérisée en ce que** le corps en matière plastique (6) présente un développement en forme de méandre.

7. Conduite à fluide selon l'une quelconque des revendications 1 à 6, **caractérisée en ce que** les tubes (1a-1f) sont disposés avec un espace intermédiaire (7) les uns par rapport aux autres, l'espace intermédiaire (7) étant rempli au moins partiellement par la matière plastique du corps en matière plastique (6).

8. Conduite à fluide selon l'une quelconque des revendications 1 à 7, **caractérisée en ce qu'**une extrémité (9) de la conduite à fluide (8) est pivotée par rapport à l'autre extrémité (10) de la conduite à fluide (8).

9. Conduite à fluide selon la revendication 8, **caractérisée en ce qu'**un angle de courbure entre les deux extrémités (9, 10) s'élève à 90 °.

10. Conduite à fluide selon l'une quelconque des revendications 1 à 9, **caractérisée en ce que** les tubes (1a-1f) sont constitués d'un métal, en particulier d'acier ou d'aluminium.

11. Procédé de fabrication d'une conduite à fluide souple (8), pour lequel on dispose, plusieurs tubes (1a-1f) parallèlement les uns à côté des autres, on les forme, les insère dans une matière plastique (6) et les pourvoit au niveau d'au moins une extrémité (9, 10) d'un élément de raccordement (11, 12) commun, **caractérisé en ce qu'**on plie un tronçon se trouvant entre les deux extrémités (9, 10) des tubes (1a-1f) en forme de méandre.

12. Procédé selon la revendication 11, **caractérisé en ce qu'**on utilise pour le pliage un outil de pressage.

13. Procédé selon la revendication 11 ou 12, **caractérisé en ce qu'**on déforme les tubes (1a-1f) se trouvant dans un plan perpendiculairement à ce plan (4).

14. Procédé selon l'une quelconque des revendications 11 à 13, **caractérisé en ce qu'**on pourvoit les tubes (1a-1f) de matière plastique (6) avant le formage.

15. Procédé selon l'une quelconque des revendications 11 à 14, **caractérisé en ce qu'**après le formage, on pivote les extrémités (9, 10) de la conduite à fluide (8) l'une contre l'autre d'un angle prédéterminé, en particulier de 90 °.
